# EUROPÄISCHE PATENTANMELDUNG

(11) **EP 1 094 648 A2**
(43) Veröffentlichungstag der Anmeldung: **25.04.2001**
(21) Anmeldenummer: 00440271.5
(22) Anmeldetag: 12.10.2000
(51) Int. Cl.: H04L 29/06, H04M 7/00, H04L 12/64

(54) **Verfahren zum Aktivieren eines inaktiven Endgeräts eines Datennetzes, Insbesondere eines IP-Netzes**

(30) Priorität: 19.10.1999 DE 19950231
(71) Anmelder: ALCATEL, 75008 Paris (FR)
(72) Erfinder: Hägebarth, Frank, 74366 Kirchheim (DE)
(74) Vertreter: Dreiss, Fuhlendorf, Steimle & Becker

(57) **Zusammenfassung**

Die Erfindung betrifft ein Verfahren zum Aufbau einer Gesprächsverbindung zwischen dem an ein Telefonnetz (4) angeschlossenen Endgerät (5) eines Anrufers und dem an das Telefonnetz (4) angeschlossenen Endgerät (6) des Gesprächspartners über ein Internet-Protocol (IP)-Netz (1). Um das Verfahren möglichst einfach zu gestalten, wird vorgeschlagen, dass für den Zugang zu dem IP-Netz (1) herkömmliche IP-Server (2; 3) von IP-Diensteanbietern eingesetzt werden. In dem IP-Netz (1) wird mindestens ein Voice-over-IP (VoIP)-Server (11) angeordnet, der die Funktionen der Telefonie über das IP-Netz (1) steuert. Der VoIP-Server (11) nimmt die Anforderung einer IP-Verbindung von dem Anrufer entgegen, aktiviert das noch inaktive Endgerät (6) des Gesprächteilnehmers über das Telefonnetz (4), ermittelt die IP-Adressen der Endgeräte (5, 6) und teilt die IP-Adressen dem jeweils anderen Endgerät (5; 6) mit. Die Endgeräte (5, 6) stellen dann untereinander eine Gesprächsverbindung über das IP-Netz (1) her.

## Beschreibung

Die vorliegende Erfindung betrifft ein Verfahren zum Aktivieren eines an einem Telefonnetz angeschlossenen, inaktiven Endgeräts eines Datennetzes zum Aufbau einer Verbindung zwischen einem weiteren Endgerät und dem zu aktivierenden Endgerät über das Datennetz. Die Erfindung betrifft außerdem einen Server eines Datennetzes. Des Weiteren betrifft die Erfindung eine zwischen einem Endgerät eines Telefonnetzes und dem Telefonnetz angeordnete Vorschalteinheit. Schließlich betrifft die vorliegende Erfindung ein Telefon und einen Mikrocomputer, vorzugsweise einen Personal Computer, mit einem Modulator/Demodulator (Modem) oder einem ISDN-Adapter.

Die vorliegende Erfindung betrifft das Gebiet der Telefonie über Datennetze, insbesondere das Gebiet der Telefonie über Internet-Protocol (IP)-Netze, die sog. Internet-Telefonie.

Aus dem Stand der Technik ist es bekannt, IP-Netze (z. B. Internet oder Intranet) zur Telefonie zu verwenden. Der Internet-Telefonie, die auch als Voice over IP (VoIP) bezeichnet wird, wird für die Zukunft eine weite Verbreitung vorausgesagt, da sie gegenüber herkömmlichen Telefonverbindungen über das Telefonnetz, insbesondere bei Ferngesprächen und bei Gesprächen ins Ausland, erhebliche Kosteneinsparungen ermöglicht. Für das VoIP müssen sowohl der Anrufer als auch der Gesprächspartner über Endgeräte mit einem Internet-Zugang verfügen. Um ein Gespräch über ein IP-Netz führen zu können, müssen beiden Endgeräte in Verbindung mit dem Internet stehen. Die Verbindung der Endgeräte zum Internet wird üblicherweise jeweils über das Telefonnetz zum Ortstarif hergestellt. Die eigentliche große und bei einer herkömmlichen Gesprächsverbindung über das Telefonnetz sehr teure Entfernung zwischen dem Anrufer und dem Gesprächspartner wird über das in der Regel sehr kostengünstige IP-Netz bewältigt.

Es gibt verschiedene Verfahren zur Durchführung von VoIP.

Ein wesentlicher Unterschied der Verfahren besteht in der Art der Endgeräte. Häufig werden hier multimediafähige Personal Computer (PC) eingesetzt, auf denen eine geeignete Software zum Verschicken von Sprachdaten über das IP-Netz installiert ist. Somit ist die Telefonie von PC zu PC via IP-Netz möglich. Durch geeignete Kompressionsverfahren kann der über das IP-Netz zu übermittelnde Datenumfang auf etwa 8 bis 12 kbit/s reduziert werden. Die Sprachqualität ist bei Verfügbarkeit entsprechender Bandbreiten akzeptabel und entspricht der in Mobilfunk-Netzen.

Bei der Telefonie von PC zu PC ist der Nutzerkreis jedoch stark eingeschränkt, da eine große Zahl potentieller Nutzer der Internet-Telefonie über keinen PC bzw. keinen entsprechend ausgerüsteten PC verfügen. Deshalb werden von einigen Anbietern von Internet-Telefonie Lösungen angeboten, bei denen mit sog. Gateways ein Übergang von dem herkömmlichen Telefonnetz in ein IP-Netz realisiert werden. Dadurch ist VoIP zwischen einem PC und einem herkömmlichen Telefon (analog oder ISDN) oder sogar zwischen zwei Telefonen möglich.

Bei der Internet-Telefonie über Gateways wählt der Anrufende mit seinem Telefon die Rufnummer eines ersten Gateways, das dem Anrufer möglichst nahe gelegen ist. Die Verbindung zu dem Gateway wird über das herkömmliche Telefonnetz hergestellt. Anschließend wählt der Anrufer die Rufnummer des gewünschten Gesprächspartners. Das erste Gateway baut dann über ein IP-Netz eine IP-Verbindung zu einem zweiten Gateway auf, das dem Gesprächspartner am nächsten gelegen ist. Anschließend wird von dem zweiten Gateway wiederum eine herkömmliche Telefonverbindung zu dem Gesprächsteilnehmer hergestellt.

Nach dem Stand der Technik müssen die Anbieter von Internet-Telefonie in möglichst vielen Ortsnetzen eine Gateway unterhalten, um den Nutzern der Internet-Telefonie flächendeckend einen möglichst preisgünstigen Zugang (zum Ortstarif) zu dem IP-Netz zu ermöglichen. Das Aufstellen und die Unterhaltung der Gateways ist jedoch sehr teuer und macht die Kostenvorteile, die die Internet-Telefonie bietet zum großen Teil wieder zunichte. Das ist auch ein entscheidender Grund, weshalb sich die Internet-Telefonie bisher noch nicht durchgesetzt hat.

Es ist deshalb eine Aufgabe der vorliegenden Erfindung ein Verfahren der eingangs genannten Art dahingehend auszugestalten und weiterzubilden, dass auf einfache Weise eine Gesprächsverbindung zwischen dem Endgerät eines Anrufers und dem Endgerät eines Gesprächspartners über ein Datennetz, insbesondere über ein Internet-Protocol (IP)-Netz, aufgebaut werden kann. Es ist des Weiteren eine Aufgabe der vorliegenden Erfindung, ein Verfahren zum Aktivieren eines inaktiven Endgeräts der eingangs genannten Art zu schaffen, bei dem das zu aktivierende Endgerät auf einfache Weise aktiviert werden kann.

Zur Lösung dieser Aufgabe schlägt die Erfindung ausgehend von dem Verfahren zum Aktivieren eines inaktiven Endgerät der eingangs genannten Art ein Verfahren vor, das gekennzeichnet ist durch die nachfolgenden Schritte:
- Aufbau einer Verbindung zu einem Server des Datennetzes und Übermittlung einer Kennung des zu aktivierenden Endgeräts an den Server des Datennetzes;
- Empfang der Kennung durch den Server des Datennetzes;
- Auswerten der Kennung und Ermittlung der Rufnummer des zu aktivierenden Endgeräts durch den Server des Datennetzes;
- Absetzen eines Rufs an das zu aktivierende Endgerät über das Telefonnetz durch den Server des Datennetzes;
- Signalisierung der Identität des Servers des Datennetzes;
- Empfangen des Rufs und Auswerten der Signalisierung durch das zu aktivierende Endgerät;
- Beenden des Rufs zu dem zu aktivierenden Endgerät durch den Server des Datennetzes; und
- Aufbau einer Verbindung zu dem Datennetz durch das zu aktivierende Endgerät, falls sich aus der Signalisierung ergibt, dass der Anrufer ein Server des Datennetzes war.

Die vorliegende Erfindung geht von einem zu aktivierenden Endgerät aus, das an ein Telefonnetz angeschlossen ist. Das Endgerät kann über das Telefonnetz eine Verbindung zu einem Datennetz herstellen. Das Datennetz ist vorzugsweise als ein Transmission-Control-Protocol/ Internet-Protocol (TCP/IP)-Netz, das sog. Internet oder Intranet, ausgebildet. Das Endgerät kann nicht unmittelbar aus dem Datennetz heraus angesprochen und aktiviert werden. Deshalb wird erfindungsgemäß ein Verfahren zum mittelbaren Aktivieren des Endgeräts auf einfache und kostengünstige Weise vorgeschlagen.

Zunächst wird von einem als weiteres Endgerät bezeichneten Endgerät eine Verbindung zu dem Datennetz über einen Zugangsknoten eines Datennetz-Anbieters (z. B. eines Internet-Providers), einen sogenannten Point-of-Presence (POP), aufgebaut. Das weitere Endgerät möchte zum Zwecke der Telefonie über das Datennetz (z. B. Internet-Telefonie) eine Verbindung zu dem zu aktivierenden Endgerät aufbauen. Der Server des Datennetzes ist bspw. als ein Voice-over-IP-Server (VoIP-Server) ausgebildet. Der VoIP-Server ist in dem Datennetz angeordnet und steht auch mit dem Telefonnetz in Verbindung. Bei dem VoIP-Server handelt es sich um einen Server, der Telefonverbindungen über das Telefonnetz aufbauen und Daten über eine Datennetz-Verbindung übermitteln kann. Dieser VoIP-Server erhält über das Datennetz von dem über den POP angeschlossenen weiteren Endgerät oder über einen anderen Server eine Kennung des zu aktivierenden Endgeräts.

Die Kennung wird von dem VoIP-Server des Datennetzes empfangen und ausgewertet. Das Auswerten der Kennung umfasst die Ermittlung der Rufnummer des zu aktivierenden Endgeräts. Dazu hat der VoIP-Server bspw. Zugriff auf eine Datenbank, in der zumindest die Kennung und Rufnummer mehrerer Endgeräte gespeichert sind. Es ist aber auch denkbar, dass als Kennung bereits die Rufnummer des zu aktivierenden Endgeräts übermittelt wird. In diesem Fall beschränkt sich das Auswerten der Kennung und die Ermittlung der Rufnummer auf das Weiterleiten der empfangenen Kennung als Rufnummer.

Als nächstes setzt der VoIP-Server des Datennetzes über das Telefonnetz einen Ruf an das zu aktivierende Endgerät ab und signalisiert damit dem Endgerät die eigene Identität. Die Identität des Servers ist bspw. seine Rufnummer, die in modernen Telefonnetzen automatisch übermittelt wird. Die Signalisierung wird bei einem ISDN-Telefon in dem D-Kanal und bei einem Analogtelefon als Calling-Line-Identification-Presentation (CLIP)-Information übertragen. Das zu aktivierende Endgerät empfängt den Ruf und wertet die Signalisierung bzw. die Rufnummer des Anrufers aus. Wird die Rufnummer eines VoIP-Servers erkannt, wird der Ruf nicht angenommen. Um die Rufnummer eines VoIP-Servers zu erkennen, wird die mit dem Ruf übermittelte Rufnummer des Anrufers mit einer in dem zu aktivierenden Endgerät abgelegten Liste mit Rufnummern bekannter VoIP-Server verglichen.

Anschließend beendet der VoIP-Server den Ruf zu dem zu aktivierenden Endgerät, ohne dass es zum Aufbau einer kostenpflichtigen Telefonverbindung von dem Server zu dem zu aktivierenden Endgerät kommt. Aus diesem Grund kann der Ruf von dem VoIP-Server zu dem zu aktivierenden Endgerät auch über eine große Entfernung abgesetzt werden, ohne dass dabei Kosten für eine Telefonverbindung anfallen. Es ist nicht notwendig, dass, wie beim Stand der Technik, in möglichst jedem Ortsnetz ein VoIP-Server zur Verfügung steht. Die Anzahl der benötigten Server wird bei dem erfindungsgemäßen Verfahren durch die Auslastung der einzelnen VoIP-Server bestimmt. Die Server können an beliebigen Orten positioniert sein und müssen lediglich mit dem Datennetz und dem Telefonnetz verbunden sein.

Anschließend baut das zu aktivierende Endgerät über einen weiteren POP eine Verbindung zu dem Datennetz auf, falls sich aus der Signalisierung bzw. aus der empfangenen Rufnummer ergibt, dass der Anrufer ein VoIP-Server des Datennetzes war. Dazu wählt das zu aktivierende Endgerät einen weiteren, möglichst naheliegenden Server des Datennetzes (POP) über das Telefonnetz an und stellt eine Verbindung zu dem POP-Server her. Der POP-Server kann dann bspw. eine Verbindung über das Datennetz zu dem VoIP-Server, von dem die Aktivierung des Endgeräts ausging, herstellen.

Der VoIP-Server besitzt jetzt eine Datennetz-Verbindung, bspw. eine IP-Verbindung, zu beiden Endgeräten. Er ermittelt die IP-Adressen der beiden Endgeräte und teilt jedem Endgerät die IP-Adresse des jeweils anderen Endgerätes mit. Beide Endgeräte beenden die IP-Verbindung zu dem VoIP-Server und nehmen eine direkte Verbindung untereinander auf.

Die Server des Datennetzes des erfindungsgemäßen Verfahrens erfüllen zwei Hauptaufgaben. Zum einen wird die Einwahl in das Datennetz über das Telefonnetz von einem Endgerät aus ermöglicht (POP-Server). Zum anderen kann über das Telefonnetz der Ruf zu dem zu aktivierenden Endgerät abgesetzt und durch Übermittlung der Signalisierung bzw. der Rufnummer des Servers dem zu aktivierenden Endgerät ein ankommendes VoIP-Gespräch signalisiert werden (VoIP-Server). Es ist denkbar, dass die zwei Hauptaufgaben der Server auf zwei verschiedenen Servern ausgeführt werden. Der eine Server wäre ein herkömmlicher POP-Server eines Datennetzes, der die erste Aufgabe erfüllt. Der andere Server wäre ein neuartiger VoIP-Server, der die zweite Aufgabe erfüllt. Die beiden Server könnten über das Datennetz miteinander in Verbindung stehen. Es ist aber ebenso möglich, dass beide Hauptaufgaben durch einen einzigen Server realisiert werden.

Gemäß einer bevorzugten Weiterbildung der vorliegenden Erfindung wird vorgeschlagen, dass der Aufbau der Verbindung zu dem Server des Datennetzes und die Übermittlung einer Kennung des zu aktivierenden Endgeräts an den Server des Datennetzes durch das weitere Endgerät erfolgt. Dazu baut das weitere Endgerät über einen POP-Server eine Verbindung zu dem VoIP-Server des Datennetzes auf. Das zu aktivierende Endgerät kann dann seinerseits über den POP-Server eine Verbindung zu dem VoIP-Server des Datennetzes aufbauen. Beide Endgeräte erhalten über das Datennetz von dem VoIP-Server die IP-Adresse des jeweils anderen Endgeräts und stellen untereinander über das Telefonnetz, das Datennetz und die beteiligten POP-Server eine direkte Verbindung her.

Falls der Datennetz-Anbieter über Einwahlserver (POP-Server) in den Ortsnetzen des weiteren Endgeräts und des zu aktivierenden Endgeräts verfügt, fallen für die Verbindung für die Einwahl der beiden Endgeräte in das Datennetz über die Server lediglich Telefongebühren nach dem Ortstarif an. Die Verbindung über das Datennetz ist in der Regel kostenlos bzw. wesentlich günstiger als eine entsprechende Verbindung über das Telefonnetz.

Im Internet werden die Einwahlserver (POP-Server) von sogenannten Internet-Providern betrieben und zur Verfügung gestellt. In der Regel besteht in jedem Ortsnetz ein Zugang zu einem oder zu mehreren POP-Servern. Gemäß der vorliegenden Erfindung kann die Verbindung der Endgerät zu dem VoIP-Server sowie zu dem jeweils anderen Endgerät über POP-Server beliebiger Internet-Provider erfolgen. Somit kann die Verbindung der Endgeräte über das Telefonnetz zu dem POP-Server in der Regel zum Ortstarif oder einem Internet-Spezialtarif eines Datennetz-Anbieters erfolgen, ohne dass der Anbieter eines Internet-Telefonie-Dienstes (VoIP-Dienst) selbst POP-Server betreiben muss.

Gemäß einer vorteilhaften Ausführungsform der vorliegenden Erfindung wird vorgeschlagen, dass zum Aufbau einer Verbindung zwischen dem weiteren Endgerät und dem zu aktivierende Endgerät
- durch das zu aktivierende Endgerät eine Verbindung zu einem Server des Datennetzes aufgebaut und die eigene Kennung an den Server übermittelt oder von dem Server ermittelt wird;
- die Datennetz-Adressen der beiden Endgeräte durch den Server des Datennetzes dem jeweils anderen Endgerät übermittelt oder die Datennetz-Adressen durch die Endgeräte bei dem Server abgefragt werden; und
- durch die Endgeräte eine Verbindung über das Telefonnetz und das Datennetz aufgebaut wird.

Das Datennetz ist vorteilhafterweise als ein Internet Protocol (IP)-Netz ausgebildet. Ein derartiges Datennetz wird auch einfach als ein Intranet oder das Internet bezeichnet.

Gemäß einer besonders vorteilhaften Weiterbildung der vorliegenden Erfindung wird vorgeschlagen, dass das weitere Endgerät als ein an ein Telefonnetz angeschlossenes Endgerät eines Anrufers und das zu aktivierende Endgerät als ein an das Telefonnetz angeschlossenes Endgerät eines Gesprächspartners ausgebildet ist, wobei das Endgerät des Gesprächspartners aktiviert wird, um eine Gesprächsverbindung zwischen dem Endgerät des Anrufers und dem Endgerät des Gesprächspartners über das IP-Netz aufzubauen.

Für den Aufbau einer Gesprächsverbindung zwischen dem Endgerät des Anrufers und dem Endgerät des Gesprächspartners wird gemäß einer bevorzugten Ausführungsform der vorliegenden Erfindung ein Verfahren vorgeschlagen, das gekennzeichnet ist durch die nachfolgenden Schritte:
- der Anrufer wählt an seinem Endgerät die Rufnummer des Endgeräts des Gesprächspartners;
- eine zwischen dem Endgerät des Anrufers und dem Telefonnetz geschaltete erste Voice-over-IP (VoIP)-Vorschalteinheit empfängt die gewählte Rufnummer;
- die erste VoIP-Vorschalteinheit baut über das Telefonnetz eine Verbindung zu einem POP-Server und über diesen zu dem Datennetz auf;
- die erste VoIP-Vorschalteinheit übermittelt über das IP-Netz die Rufnummer des Gesprächspartners und die eigene IP-Adresse an einen VoIP-Server des Datennetzes;
- der VoIP-Server empfängt die Rufnummer des Gesprächspartners und die IP-Adresse der ersten VoIP-Vorschalteinheit;
- der VoIP-Server wählt über das Telefonnetz das Endgerät des Gesprächspartners an;
- über das Telefonnetz wird dem Endgerät des Gesprächspartners die Rufnummer des VoIP-Servers signalisiert;
- eine zwischen dem Endgerät des Gesprächspartners und dem Telefonnetz geschaltete zweite VoIP-Vorschalteinheit empfängt die Rufnummer;
- die zweite VoIP-Vorschalteinheit vergleicht die Rufnummer mit den Rufnummern bekannter VoIP-Server einer in der VoIP-Vorschalteinheit abgelegten Liste;
- die zweite VoIP-Vorschalteinheit erkennt den VoIP-Server und verhindert die Weiterleitung des ankommenden Rufes an das Endgerät des Gesprächspartners;
- die zweite VoIP-Vorschalteinheit baut über das Telefonnetz eine Verbindung zu einem POP-Server auf;
- die zweite VoIP-Vorschalteinheit übermittelt über das IP-Netz die eigene IP-Adresse an den VoIP-Server;
- der VoIP-Server übermittelt die IP-Adresse der ersten VoIP-Vorschalteinheit und die IP-Adresse der zweiten VoIP-Vorschalteinheit an die jeweils andere VoIP-Vorschalteinheit;
- es wird eine IP-Verbindung von der ersten VoIP-Vorschalteinheit zu der zweiten VoIP-Vorschalteinheit hergestellt;
- die zweite VoIP-Vorschalteinheit veranlaßt das Senden eines Rufes zu dem Endgerät des Gesprächspartners; und
- es wird eine Gesprächsverbindung zwischen dem Endgerät des Anrufers und dem Endgerät des Gesprächspartners aufgebaut, falls der Gesprächspartner den Ruf entgegennimmt.

Bei dieser Ausführungsform der vorliegenden Erfindung sind die zwei Hauptaufgaben der Server des Datennetzes auf zwei Server aufgeteilt. Der POP-Server erfüllt die Aufgabe eines herkömmlichen Zugangs-Servers eines Datennetzes, die Einwahl in das Datennetz über das Telefonnetz von einem Endgerät aus. Durch den VoIP-Server kann über das Telefonnetz der Ruf zu dem zu aktivierenden Endgerät abgesetzt und die Signalisierung zu dem zu aktivierenden Endgerät übermittelt werden. Der POP-Server und der VoIP-Server stehen über das Datennetz (im vorliegenden Fall über das IP-Netz) miteinander in Verbindung.

Alternativ wird vorgeschlagen, dass der VoIP-Server und der POP-Server zu einem gemeinsamen POP-/VoIP-Server zusammengefasst sind.

Eine weitere Aufgabe der vorliegenden Erfindung besteht darin, einen Server eines Datennetzes dahingehend auszugestalten und weiterzubilden, dass er eine einfache Aktivierung eines inaktiven Endgerät eines Datennetzes ermöglicht.

Zur Lösung dieser Aufgabe schlägt die Erfindung einen Server eines Datennetzes vor, der gekennzeichnet ist durch
- Mittel zum Empfang einer von dem Endgerät übermittelten Kennung eines an das Telefonnetz angeschlossenen, zu aktivierenden Endgeräts;
- Mittel zum Absetzen eines Rufs an das zu aktivierende Endgerät über das Telefonnetz; und
- Mittel zum Beenden des Rufs zu dem zu aktivierenden Endgerät.

Durch einen derart ausgebildeten Server kann über das Telefonnetz der Ruf zu dem zu aktivierenden Endgerät abgesetzt werden. Moderne Telefonnetze übermitteln die Rufnummer des Servers zu dem zu aktivierenden Endgerät. Das zu aktivierende Endgerät vergleicht die übermittelte Rufnummer mit den Rufnummern bekannter Server des Datennetzes. Falls erkannt wird, dass ein ankommender Ruf von einem Server des Datennetzes kommt, wird der Ruf nicht entgegengenommen. Dadurch kann auf einfache Weise ein bestimmtes inaktives Endgerät eines Datennetzes aktiviert werden, ohne dass durch die Aktivierung für den Diensteanbieter oder für den Nutzer des Endgeräts Kosten für eine Telefonverbindung entstehen würden.

Gemäß einer bevorzugten Ausführungsform der vorliegenden Erfindung wird vorgeschlagen, dass der Server als ein Zugangs-Server (POP-Server) eines IP-Netzes ausgebildet ist.

Vorteilhafterweise weist der Server Mittel zum Auswerten der Kennung und Ermittlung der Rufnummer des zu aktivierenden Endgeräts auf.

Gemäß einer anderen bevorzugten Ausführungsform wird vorgeschlagen, dass der Server Mittel zur Annahme eines Anrufs eines an ein Telefonnetz angeschlossenen Endgeräts über das Telefonnetz und Mittel zum Aufbau einer Verbindung von dem Endgerät zu dem Datennetz aufweist. Dadurch kann der erfindungsgemäße Server zum Aufbau einer Gesprächsverbindung zwischen dem Endgerät eines Anrufers und dem Endgerät eines Gesprächspartners über ein Datennetz, insbesondere über ein Internet-Protocol (IP)-Netz, eingesetzt werden.

Eine weitere Aufgabe der vorliegenden Erfindung besteht darin, eine Vorschalteinheit der eingangs genannten Art dahingehend auszugestalten und weiterzubilden, dass ein beliebiges inaktives Endgerät eines Datennetzes, insbesondere ein Telefon, auf einfache Weise aktiviert werden kann.

Zur Lösung dieser Aufgabe schlägt die Erfindung ausgehend von der Vorschalteinheit der eingangs genannten Art eine Vorschalteinheit vor, die gekennzeichnet ist durch
- Mittel zum Aufbau einer Verbindung über das Telefonnetz von dem Endgerät zu einem Server (z. B. POP-Server) eines Datennetzes aufweist;
- Mittel zum Empfangen des Rufs eines Servers (z. B. VoIP-Server) des Datennetzes;
- Mittel zum Auswerten der Rufnummer eines Anrufers;
- Mittel zum Vergleich der Rufnummer mit den Rufnummern bekannter Server (z. B. VoIP-Server) des Datennetzes;
- Mittel zur Abfrage und/oder zum Empfang einer Datennetz-Adresse einer weiteren Vorschalteinheit des Anrufers von dem Server (z. B. VoIP-Server) des Datennetzes; und
- Mittel zum Aufbau einer Datenverbindung zu der weiteren Vorschalteinheit über das Datennetz.

Gemäß einer vorteilhaften Weiterbildung der vorliegenden Erfindung wird vorgeschlagen, dass die Vorschalteinheit Mittel zum Übermitteln der Kennung eines zu aktivierenden Endgeräts bzw. eines Gesprächspartners an den Server des Datennetzes aufweist. Die übermittelte Kennung ist bspw. die Rufnummer des zu aktivierenden Endgeräts. Dadurch kann die erfindungsgemäße Einheit zum Aktivieren eines beliebigen Endgeräts eingesetzt werden.

Ein Endgerät veranlasst die Aktivierung eines beliebigen inaktiven Endgeräts auf die oben beschriebene Weise. Gemäß einer bevorzugten Ausführungsform der vorliegenden Erfindung wird vorgeschlagen, dass die Vorschalteinheit Mittel zum Übermitteln der Kennung des Endgeräts, mit dem sie verbunden ist, an den Server des Datennetzes aufweist. Dadurch kann von dem aktivierten Endgerät aus über die Vorschalteinheit eine Verbindung zu dem Server des Datennetzes aufgebaut und die Kennung des aktivierten Endgeräts an den Server übermittelt werden. Der Server baut dann eine Verbindung über das Datennetz zwischen dem Endgerät, das die Aktivierung veranlasst hat, und dem aktivierten Endgerät auf.

Vorteilhafterweise ist die Vorschalteinheit als ein Mikrocomputer mit einem Prozessor, einem Speicher, einer Schnittstelle zu dem Telefonnetz und einer Schnittstelle zu einem Internet-Protocol (IP)-Netz ausgebildet. In dem Speicher der Vorschalteinheit sind bspw. die Identitäten, insbesondere die IP-Adressen, bestimmter Server des Datennetzes gespeichert. Wenn ein Ruf bei der Vorschalteinheit eingeht und eine Signalisierung mit der Identität des Anrufers übermittelt wird, kann die Einheit die Identität des Anrufers mit den gespeicherten Identitäten der Server des Datennetzes vergleichen und so feststellen, ob der Anrufer ein Server des Datennetzes ist. Die Vorschalteinheit wirkt gegenüber dem Datennetz wie ein Computer mit einem Modem oder einem ISDN-Adapter und gegenüber dem Endgerät als ein herkömmlicher Telefonanschluss.

Gemäß der vorliegenden Erfindung kann die Vorschalteinheit als ein gesondertes Gerät ausgebildet sein, das zwischen das Endgerät und das Telefonnetz, vorzugsweise zwischen das Endgerät und den Telefonanschluss, geschaltet wird. Es ist aber auch denkbar, dass die Vorschalteinheit Teil eines Endgeräts ist. Dazu wird zum einen ein Telefon vorgeschlagen, in das eine Vorschalteinheit nach einem der Ansprüche 12 bis 14 integriert ist. Zum anderen wird ein Computer mit einem Modulator/ Demodulator (Modem) oder einem ISDN-Adapter vorgeschlagen, wobei in den Modem oder den ISDN-Adapter eine Vorschalteinheit nach einem der Ansprüche 12 bis 14 integriert ist.

Ein bevorzugtes Ausführungsbeispiel der vorliegenden Erfindung wird im Folgenden anhand der Zeichnungen näher erläutert. Es zeigen:
- Fig. 1: Vorrichtungen zur Durchführung des erfindungsgemäßen Verfahrens zum Aufbau einer Gesprächsverbindung zwischen einem Endgerät eines Anrufers und einem Endgerät eines Gesprächspartners; und
- Fig. 2: ein Ablaufdiagramm des erfindungsgemäßen Verfahrens.

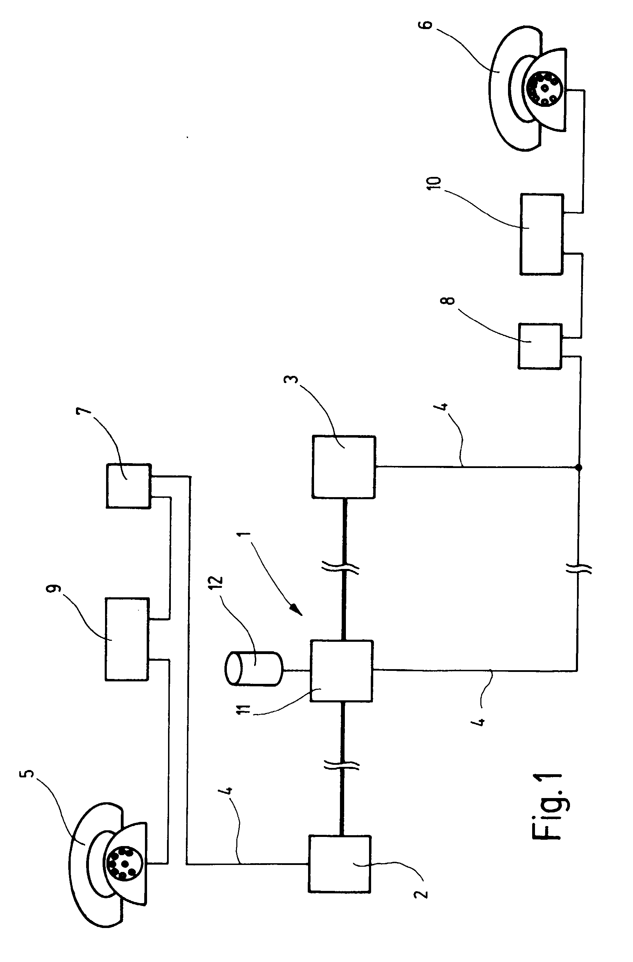

In Fig. 1 ist ein als ein Internet-Protocol (IP)-Netz, insbesondere als das Internet, ausgebildetes Datennetz in seiner Gesamtheit mit dem Bezugszeichen 1 gekennzeichnet. In dem Datennetz 1 sind Server 2, 3 des Datennetzes angeordnet. Die Server 2, 3 sind als Zugangsknoten eines Datennetz-Anbieters, sogenannte Point-of-Presence (POP)-Server, ausgebildet. Die Verbindungen zwischen den Servern 2, 3 in dem Datennetz 1 sind durch eine dicke Linie verdeutlicht. Die Server 2, 3 stehen über ein Telefonnetz 4 mit als herkömmliche Telefone ausgebildeten Endgeräten 5, 6 in Verbindung. Sie haben die Aufgabe, von den Endgeräten 5, 6 aus die Einwahl in das Datennetz 1 über das Telefonnetz 4 zu ermöglichen.

Die Endgeräte 5, 6 sind über herkömmliche Telefonanschlussdosen 7, 8 an das Telefonnetz 4 angeschlossen. Zwischen den Endgeräten 5, 6 und den Telefonanschlussdosen 7, 8 sind Vorschalteinheiten 9, 10 zwischengeschaltet. Die Vorschalteinheiten 9, 10 sind entweder als gesonderte Einheiten ausgebildet, oder aber in die Endgeräte 5, 6 an geeigneter Stelle integriert. Der Aufbau und die genaue Funktion der Vorschalteinheiten 9, 10 wird nachfolgend näher beschrieben.

Das Datennetz 1 erstreckt sich über weite Entfernungen, insbesondere über die ganze Welt, was durch die Unterbrechungen der Verbindungen des Datennetzes 1 in Fig. 1 angedeutet ist. In dem Datennetz 1 ist ein als Voice-over-Internet-Protocol (VoIP)-Server ausgebildeter Server 11 angeordnet, der mit den Servern 2, 3 über das Datennetz 1 in Verbindung steht. Der VoIP-Server 11 steht mit dem Telefonnetz 4 in Verbindung. Der genaue Aufbau und die Funktion des Servers 11 wird nachfolgend näher beschrieben.

Gegenstand der vorliegenden Erfindung ist das nachfolgend beschriebene Verfahren zum Aufbau einer Gesprächsverbindung zwischen dem Endgerät 5 eines Anrufers und dem Endgerät 6 eines Gesprächspartners über das Datennetz 1. Des Weiteren sind die Vorschalteinheiten 9, 10 und der VoIP-Server 11 Gegenstand der vorliegenden Erfindung.

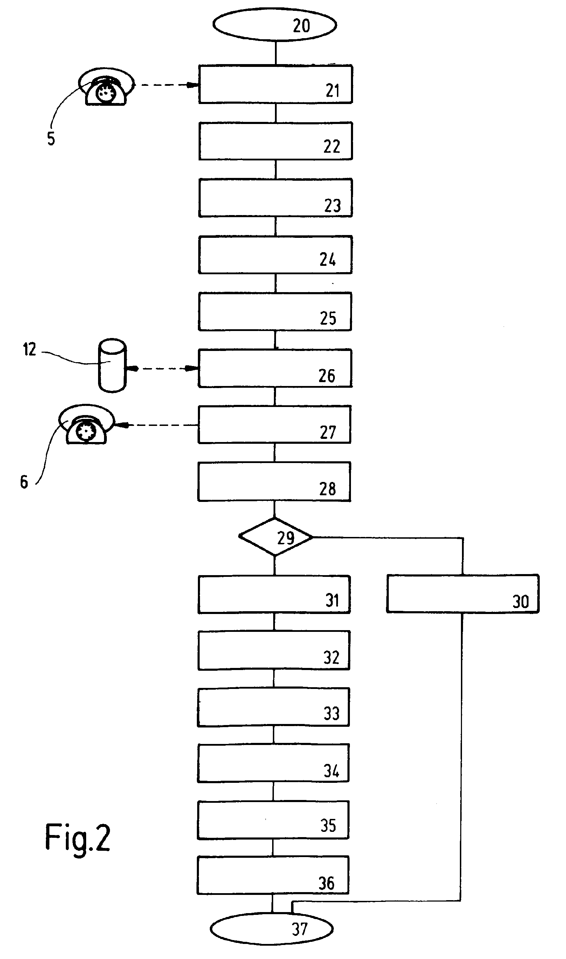

Zur Beschreibung des erfindungsgemäßen Verfahrens wird nachfolgend auf Fig. 2 Bezug genommen. Dort ist der Beginn des Verfahrens durch Block 20 repräsentiert. In Block 21 wählt ein Anrufer (nicht dargestellt) auf seinem Endgerät 5 die Kennung, bspw. die Rufnummer, des Endgeräts 6 eines gewünschten Gesprächspartners. Die gewählte Kennung wird in Block 22 von der Vorschalteinheit 9 empfangen. Dann baut die Vorschalteinheit 9 in Block 23 über das Telefonnetz 4 eine Verbindung zu dem Server 2 auf. Der Server 2 stellt eine IP-Verbindung zwischen der Vorschalteinheit 9 und dem Datennetz 1 her. Die Vorschalteinheit 9 baut über das Telefonnetz 4, den Server 2 und das Datennetz 1 eine IP-Verbindung zu dem VoIP-Server 11 in Block 24 auf. Von der Vorschalteinheit 9 wird die eigene Kennung, z. B. die eigene IP-Adresse, und die Kennung des Gesprächspartners dann in Block 25 an den VoIP-Server 11 übermittelt.

Der VoIP-Server 11 empfängt die Kennung. Falls es sich bei der empfangenen Kennung nicht um die Rufnummer eines gewünschten Gesprächspartners handelt, wir die empfangene Kennung in Block 26 ausgewertet und die Rufnummer des Endgeräts 6 des Gesprächspartners ermittelt. Dazu ist es denkbar, dass der VoIP-Server 11 auf eine Datenbank 12 Zugriff hat, in der Angaben über Gesprächsteilnehmer des Telefonnetzes 4 gespeichert sind. Der VoIP-Server 11 setzt dann in Block 27 über das Telefonnetz 4 einen Ruf zu dem zu aktivierenden Endgerät 6 ab und übermittelt eine Signalisierung an das zu aktivierende Endgerät 6. Die übermittelte Signalisierung enthält die Identität, insbesondere die Rufnummer, des Servers 11. Bei einem digitalen Endgerät 6, das nach dem ISDN-Standard arbeitet, wird die Signalisierung über den D-Kanal des Telefonnetzes 4 und bei einem analogen Endgerät 6 als Calling-Line-Identification-Presentation (CLIP)-Information übertragen.

Die Vorschalteinheit 10 empfängt in Block 28 die Signalisierung und wertet sie in Block 29 aus. Aus der übermittelten Identität des Servers 11 kann die Vorschalteinheit 10 bestimmen, ob es sich bei dem Anrufer um einen VoIP-Server 11 des Datennetzes 1 handelt. Dazu ist es denkbar, dass in einem Speicher der Vorschalteinheit die Identitäten sämtlicher VoIP-Server 11 des Datennetzes gespeichert sind. Die Identitäten der VoIP-Server 11 können bei jedem Verbindungsaufbau aktualisiert werden. Wenn die Vorschalteinheit 10 erkennt, dass es sich nicht um einen VoIP-Server 11 des Datennetzes 1, sondern um einen ganz normalen Anruf eines Anrufers über das Telefonnetz 4 handelt, (Block 30) schaltet sie den eingehenden Ruf an das Endgerät 6 weiter und ermöglicht den Aufbau einer herkömmlichen Telefonverbindung.

Wenn es sich um einen Anruf des VoIP-Servers 11 handelt, baut der VoIP-Server 11 nach der Übermittlung der Signalisierung in Block 31 den Ruf von dem VoIP-Server 11 zu dem Endgerät 6 ab, ohne dass es zum Aufbau einer Telefonverbindung über das Telefonnetz 4 zwischen dem VoIP-Server 11 und dem Endgerät 6 kam und ohne dass Kosten für die Nutzung des Telefonnetzes entstanden sind. Dann baut die Vorschalteinheit 10 in Block 32 über das Telefonnetz 4 eine Verbindung zu einem möglichst nah, vorzugsweise im Ortsnetz, gelegenen Server 3 auf. Ebenfalls in Block 32 stellt der Server 3 eine IP-Verbindung zwischen der Vorschalteinheit 10 und dem Datennetz 1 her. Über das Telefonnetz 4, den Server 3 und das Datennetz 1 übermittelt die Vorschalteinheit 10 in Block 33 eine eigene Kennung, insbesondere die eigene IP-Adresse, an den VoIP-Server 11. In Block 34 übermittelt der VoIP-Server 11 die Kennungen der Vorschalteinheit 9 des Anrufers und der Vorschalteinheit 10 des Gesprächspartners an die jeweils andere Vorschalteinheit 10 bzw. 9. Dann wird in Block 35 durch die Vorschalteinheiten 9, 10 eine Gesprächsverbindung von dem Endgerät 5 des Anrufers zu dem Endgerät 6 des Gesprächpartners über das Datennetz 1 aufgebaut, über die sich der Anrufer und der Gesprächspartner unterhalten können.

Sobald einer der beiden, Anrufer oder Gesprächspartner, bspw. durch einen Tastendruck signalisiert, dass er die Verbindung beenden möchte, wird die Verbindung durch eine angeschlossene Vorschalteinheit 9; 10 in Block 36 abgebaut. In Block 37 ist das Verfahren beendet.

Die Verbindungen von den Endgeräten 5, 6 zu den Servern 2, 3 des Datennetzes erfolgt über das Telefonnetz 4, vorzugsweise zum Ortstarif. Die eigentliche große und bei einer herkömmlichen Gesprächsverbindung über das Telefonnetz sehr teure Entfernung zwischen dem Anrufer und dem Gesprächspartner wird bei dem erfindungsgemäßen Verfahren über das in der Regel kostengünstige Datennetz 1 bewältigt. Der Anbieter des Telefondienstes über das Datennetz 1 muss nicht in jedem Ortsnetz einen Server 11 unterhalten, um dem Anrufer bzw. dem Gesprächspartner einen möglichst kostengünstigen Zugang zu dem Datennetz 1 zu bieten. Vielmehr wird bei dem erfindungsgemäßen Verfahren die Infrastruktur eines Anbieters (Zugangs-Providers) des Datennetzes 1 ausgenutzt. Da sich Datennetze 1, insbesondere das Internet, in letzter Zeit einer großen Beliebtheit erfreut, gibt es relativ viele Anbieter von Zugängen zu Datennetzen 1. Somit ist der Zugang zu dem Datennetz 1 aus nahezu allen Ortsnetzen zum Ortstarif möglich.

Die Auswertung der Kennung des Endgeräts 6 des Gesprächspartners in Block 26 kann auch eine Überprüfung umfassen, ob der gewünschte Gesprächspartner überhaupt ein Kunde des Anbieters der Telefonie über das Datennetz 1 (z. B. der Internet-Telefonie) ist und ob er eine Vorschalteinheit 10 besitzt. Dazu ist es denkbar, dass die in der Datenbank 12 gespeicherten Angaben über Gesprächsteilnehmer des Telefonnetzes 4 auch Angaben umfassen, ob die Gesprächsteilnehmer Kunden des Diensteanbieters der Internet-Telefonie sind. Falls der gewünschte Gesprächspartner kein Kunde des Diensteanbieters ist, kann zu ihm auch keine Gesprächsverbindung über das Datennetz 1 aufgebaut werden. Der VoIP-Server 11 teilt dies der Vorschalteinheit 7 mit. Die Vorschalteinheit 7 veranlasst daraufhin den Aufbau einer herkömmlichen Gesprächsverbindung über das Telefonnetz 4 zu dem Endgerät 6 des gewünschten Gesprächspartners.

## Patentansprüche

1. Verfahren zum Aktivieren eines an einem Telefonnetz (4) angeschlossenen, inaktiven Endgeräts (6) eines Datennetzes (1) zum Aufbau einer Verbindung zwischen einem weiteren Endgerät (5) und dem zu aktivierenden Endgerät (6) über das Datennetz (1), **gekennzeichnet durch** die nachfolgenden Schritte:
- Aufbau einer Verbindung zu einem Server (11) des Datennetzes (1) und Übermittlung einer Kennung des zu aktivierenden Endgeräts (6) an den Server (11) des Datennetzes (1);
- Empfang der Kennung durch den Server (11) des Datennetzes (1);
- Auswerten der Kennung und Ermittlung der Rufnummer des zu aktivierenden Endgeräts (6) durch den Server (11) des Datennetzes (1);
- Absetzen eines Rufs an das zu aktivierende Endgerät (6) über das Telefonnetz (4) durch den Server (11) des Datennetzes (1);
- Signalisierung der Identität des Servers (11) des Datennetzes;
- Empfangen des Rufs und Auswerten der Signalisierung durch das zu aktivierende Endgerät (6) ;
- Beenden des Rufs zu dem zu aktivierenden Endgerät (6) durch den Server (11) des Datennetzes (1); und
- Aufbau einer Verbindung zu dem Datennetz (1) durch das zu aktivierende Endgerät (6), falls sich aus der Signalisierung ergibt, dass der Anrufer ein Server (11) des Datennetzes (1) war.

2. Verfahren nach Anspruch 1, dadurch gekennzeichnet, dass der Aufbau der Verbindung zu dem Server (11) des Datennetzes (1) und die Übermittlung einer Kennung des zu aktivierenden Endgeräts (6) an den Server (11) des Datennetzes (1) durch das weitere Endgerät (5) erfolgt.

3. Verfahren nach Anspruch 1 oder 2, dadurch gekennzeichnet, dass zum Aufbau einer Verbindung zwischen dem weiteren Endgerät und dem zu aktivierende Endgerät
- durch das zu aktivierende Endgerät (6) eine Verbindung zu einem Server (11) des Datennetzes (1) aufgebaut und die eigene Kennung an den Server (11) übermittelt oder von dem Server (11) ermittelt wird;
- die Datennetz-Adressen der beiden Endgeräte (5, 6) durch den Server (11) des Datennetzes dem jeweils anderen Endgerät (5; 6) übermittelt oder die Datennetz-Adressen durch die Endgeräte (5, 6) bei dem Server (11) abgefragt werden; und
- durch die Endgeräte (5, 6) eine Verbindung über das Telefonnetz (4) und das Datennetz (1) aufgebaut wird.

4. Verfahren nach einem der Ansprüche 1 bis 3, dadurch gekennzeichnet, dass das Datennetz (1) als ein Internet Protocol (IP)-Netz ausgebildet ist.

5. Verfahren nach Anspruch 4, dadurch gekennzeichnet, dass das weitere Endgerät (5) als ein an ein Telefonnetz (4) angeschlossenes Endgerät (5) eines Anrufers und das zu aktivierende Endgerät (6) als ein an das Telefonnetz (4) angeschlossenes Endgerät (6) eines Gesprächspartners ausgebildet ist, wobei das Endgerät (6) des Gesprächspartners aktiviert wird, um eine Gesprächsverbindung zwischen dem Endgerät (5) des Anrufers und dem Endgerät (6) des Gesprächspartners über das IP-Netz (1) aufzubauen.

6. Verfahren nach Anspruch 5, gekennzeichnet durch die nachfolgenden Schritte:
- der Anrufer wählt an seinem Endgerät (5) die Rufnummer des Endgeräts (6) des Gesprächspartners;
- eine zwischen dem Endgerät (5) des Anrufers und dem Telefonnetz (4) geschaltete erste Voice-over-IP (VoIP)-Vorschalteinheit (9) empfängt die gewählte Rufnummer;
- die erste VoIP-Vorschalteinheit (9) baut über das Telefonnetz (4) eine Verbindung zu einem POP-Server (2) und über diesen zu dem Datennetz (1) auf;
- die erste VoIP-Vorschalteinheit (9) übermittelt über das IP-Netz (1) die Rufnummer des Gesprächspartners und die eigene IP-Adresse an einen VoIP-Server (11) des Datennetzes (1);
- der VoIP-Server (11) empfängt die Rufnummer des Gesprächspartners und die IP-Adresse der ersten VoIP-Vorschalteinheit (9);
- der VoIP-Server (11) wählt über das Telefonnetz (4) das Endgerät (6) des Gesprächspartners an;
- über das Telefonnetz (4) wird dem Endgerät (6) des Gesprächspartners die Rufnummer des VoIP-Servers (11) signalisiert;
- eine zwischen dem Endgerät (6) des Gesprächspartners und dem Telefonnetz (4) geschaltete zweite VoIP-Vorschalteinheit (10) empfängt die Rufnummer;
- die zweite VoIP-Vorschalteinheit (10) vergleicht die Rufnummer mit den Rufnummern bekannter VoIP-Server;
- die zweite VoIP-Vorschalteinheit (10) erkennt den VoIP-Server (11) und verhindert die Weiterleitung des ankommenden Rufes an das Endgerät (6) des Gesprächspartners;
- die zweite VoIP-Vorschalteinheit (10) baut über das Telefonnetz (4) eine Verbindung zu einem POP-Server (3) auf;
- die zweite VoIP-Vorschalteinheit (10) übermittelt über das IP-Netz (1) die eigene IP-Adresse an den VoIP-Server (11);
- der VoIP-Server (11) übermittelt die IP-Adresse der ersten VoIP-Vorschalteinheit (9) und die IP-Adresse der zweiten VoIP-Vorschalteinheit (10) an die jeweils andere VoIP-Vorschalteinheit (9; 10);
- es wird eine IP-Verbindung von der ersten VoIP-Vorschalteinheit (9) zu der zweiten VoIP-Vorschalteinheit (10) hergestellt;
- die zweite VoIP-Vorschalteinheit (10) veranlaßt das Senden eines Rufes zu dem Endgerät (6) des Gesprächspartners; und
- es wird eine Gesprächsverbindung zwischen dem Endgerät (5) des Anrufers und dem Endgerät (6) des Gesprächspartners aufgebaut, falls der Gesprächspartner den Ruf entgegennimmt.

7. Verfahren nach Anspruch 6, dadurch gekennzeichnet, dass der VoIP-Server (11) und der POP-Server (2; 3) zu einem gemeinsamen POP-/VoIP-Server zusammengefasst sind.

8. Server (11) eines Datennetzes, **gekennzeichnet durch**
- Mittel zum Empfang einer von dem Endgerät (5) übermittelten Kennung eines an das Telefonnetz (4) angeschlossenen, zu aktivierenden Endgeräts (6) ;
- Mittel zum Absetzen eines Rufs an das zu aktivierende Endgerät (6) über das Telefonnetz (4); und
- Mittel zum Beenden des Rufs zu dem zu aktivierenden Endgerät (6).

9. Server (11) nach Anspruch 8, dadurch gekennzeichnet, dass der Server (11) als ein Zugangs-Server (2; 3) eines IP-Netzes (1) ausgebildet ist.

10. Server (11) nach Anspruch 8 oder 9, dadurch gekennzeichnet, dass der Server (11) Mittel zum Auswerten der Kennung und Ermittlung der Rufnummer des zu aktivierenden Endgeräts (6) aufweist.

11. Server (11) nach einem der Ansprüche 8 bis 10, dadurch gekennzeichnet, dass der Server (2, 3, 11) Mittel zur Annahme eines Anrufs eines an ein Telefonnetz (4) angeschlossenen Endgeräts (5) über das Telefonnetz (4) und Mittel zum Aufbau einer Verbindung von dem Endgerät (5) zu dem Datennetz (1) aufweist.

12. Zwischen einem Endgerät (5; 6) eines Telefonnetzes (4) und dem Telefonnetz (4) angeordnete Vorschalteinheit (9), **gekennzeichnet durch**
- Mittel zum Aufbau einer Verbindung über das Telefonnetz (4) von dem Endgerät (5) zu einem Server (2; 3) eines Datennetzes (1) aufweist;
- Mittel zum Empfangen des Rufs eines Servers (11) des Datennetzes (1) ;
- Mittel zum Auswerten der Rufnummer des Anrufers;
- Mittel zum Vergleich der Rufnummer des Anrufers mit den Rufnummern bekannter Server des Datennetzes;
- Mittel zur Abfrage und/oder zum Empfang einer Datennetz-Adresse einer weiteren Vorschalteinheit (10; 9) des Anrufers von dem Server des Datennetzes (1) ; und
- Mittel zum Aufbau einer Datenverbindung zu der weiteren Vorschalteinheit (10; 9) über das Datennetz (1) .

13. Vorschalteinheit (9; 10) nach Anspruch 12, dadurch gekennzeichnet, dass die Vorschalteinheit (9; 10) Mittel zum Übermitteln der Kennung eines zu aktivierenden Endgeräts (6) bzw. eines Gesprächspartners an den Server (2; 3) des Datennetzes (1) aufweist.

14. Vorschalteinheit (9; 10) nach Anspruch 12 oder 13, dadurch gekennzeichnet, dass die Vorschalteinheit (9; 10) als ein Mikrocomputer mit Prozessor, Speicher, einer Schnittstelle zu dem Telefonnetz (4) und einer Schnittstelle zu einem Internet-Protocol (IP)-Netz (1) ausgebildet ist.

15. Telefon (5, 6), **dadurch gekennzeichnet,** dass in das Telefon (5, 6) eine Vorschalteinheit (9; 10) nach einem der Ansprüche 12 bis 14 integriert ist.

16. Mikrocomputer, vorzugsweise ein Personal Computer, mit einem Modulator/Demodulator (Modem) oder einem ISDN-Adapter, **dadurch gekennzeichnet,** dass in den Modem oder den ISDN-Adapter eine Vorschalteinheit (9; 10) nach einem der Ansprüche 12 bis 14 integriert ist.
